**Europäisches Patentamt**

**European Patent Office**

**Office européen des brevets**

(19)

(11) Veröffentlichungsnummer: **0 063 095**
**A1**

(12) # EUROPÄISCHE PATENTANMELDUNG

(21) Anmeldenummer: 82730020.3

(22) Anmeldetag: 03.03.82

(51) Int. Cl.³: **G 01 K 17/06**
**G 01 K 11/24, G 01 F 1/66**

(30) Priorität: 31.03.81 DE 3113522

(43) Veröffentlichungstag der Anmeldung:
20.10.82 Patentblatt 82/42

(84) Benannte Vertragsstaaten:
AT DE FR GB NL

(71) Anmelder: SIEMENS AKTIENGESELLSCHAFT Berlin
und München
Postfach 22 02 61
D-8000 München 22(DE)

(72) Erfinder: Bahner, Heinrich, Dipl.-Phys. Dr.
Aug.-Viktoria-Strasse 4
D-1000 Berlin 33(DE)

(54) **Wärmemengen-Messeinrichtung.**

(57) Die Erfindung bezieht sich auf eine Wärmemengen-Meßeinrichtung mit einer Vorrichtung zur Bestimmung der Strömungsgeschwindigkeit eines Mediums und einer Einrichtung zur Ermittlung der Temperatur des strömenden Mediums. Um eine solche Meßeinrichtung so auszugestalten, daß sie eine hohe Meßgenauigkeit aufweist, enthält die Vorrichtung zur Strömungsgeschwindigkeitsbestimmung einen Ultraschallsender (3) mit Interdigitalstruktur der Polarisation und/oder der Elektroden. Zwei Ultraschallempfängem (6, 7) ist eine elektronische Auswerteschaltung (10) nachgeordnet, die ein der Phasenverschiebung der Schallstrahlen (4, 5) entsprechendes Meßsignal erzeugt. Dem Ultraschallsender (3) ist ein spannungsgesteuerter Oszillator (9) vorgeordnet, der an einem einen Ultraschallempfänger (7) nachgeordneten elektronischen Regler (28) angeschlossen ist. Eine Rechenschaltung (20) ist über einen Frequenz-Temperatur-Wandler (22) mit dem Oszillator (9) und über einen Multiplizierer (12) mit der Auswerteschaltung (10) verbunden. Die Erfindung ist bei Wärmemengen-Meßeinrichtung einsetzbar (Figur).

EP 0 063 095 A1

SIEMENS AKTIENGESELLSCHAFT

Unser Zeichen

Berlin und München

VPA 81 P 3713 E

Wärmemengen-Meßeinrichtung

Die Erfindung bezieht sich auf eine Wärmemengen-Meßeinrichtung mit einer Vorrichtung zur Bestimmung der Strömungsgeschwindigkeit eines Mediums und einer Einrichtung zur Ermittlung der Temperatur des strömenden Mediums.

Es ist allgemein bekannt, daß sich die Wärmemenge eines strömenden Mediums dadurch ermitteln läßt, daß einerseits die Menge des durchgeflossenen Mediums erfaßt und andererseits die Temperatur des Mediums mittels eines Temperaturfühlers bestimmt wird; beispielsweise mit Hilfe eines elektronischen Rechners läßt sich damit die transportierte Wärmemenge ermitteln. Ferner ist es bekannt, daß eine Bestimmung der Wärmemenge auch dadurch vorgenommen werden kann, daß die Strömungsgeschwindigkeit des Mediums und die Temperatur erfaßt wird. Die Strömungsgeschwindigkeit ist nämlich mit der Wärmemenge pro Zeiteinheit $\dot{Q}$ durch folgende bekannte Gleichung (1) verknüpft.

$$\dot{Q} = \gamma\, v \cdot A \cdot c_p \cdot \Delta \vartheta \qquad (1)$$

In dieser Gleichung bedeuten $\gamma$ die Dichte des Mediums, A die durchströmte Fläche, $c_p$ die spezifische Wärme des Mediums und $\Delta \vartheta$ die Temperaturdifferenz. Die Temperaturdifferenz $\Delta \vartheta$ wird dabei mittels eines Temperaturfühlers ermittelt.

Die Erfindung geht von einer Wärmemengen-Meßeinrichtung aus, bei der über die Erfassung der Strömungsgeschwindigkeit des Mediums und seiner Temperatur die Wärmemenge

Kr 3 Sby / 26.03.1981

pro Zeiteinheit erfaßt wird, und setzt sich die Aufgabe, eine solche Einrichtung so auszugestalten, daß sie weitgehend trägheitsarm den Temperaturänderungen des Mediums folgt und sich daher durch eine hohe Meßgenauigkeit auszeichnet.

Zur Lösung dieser Aufgabe enthält bei einer Wärmemengen-Meßeinrichtung der eingangs angegebenen Art erfindungsgemäß die Vorrichtung zur Bestimmung der Strömungsgeschwindigkeit einen als Ultraschallsender arbeitenden Ultraschallwandler, der Schallstrahlen durch das strömende Medium zu zwei zur Strömungsrichtung versetzt zum Ultraschallsender liegenden, als Ultraschallempfänger betriebenen Ultraschallwandlern sendet, und weist eine an die Ultraschallempfänger angeschlossene Auswerteschaltung auf, die ein der Phasenverschiebung der empfangenden Schallstrahlen entsprechendes Meßsignal erzeugt; zumindest der Ultraschallsender ist als ein Ultraschallwandler mit Interdigitalstruktur der Polarisation und/oder der Elektroden ausgebildet und mit einem Ausgang eines spannungsgesteuerten Oszillators verbunden, der mit seinem Eingang an dem Ausgang eines einem Ultraschallempfänger nachgeordneten elektronischen Reglers angeschlossen ist; an dem Ausgang des Oszillators ist auch ein die Einrichtung zu Ermittlung der Temperatur bildender Frequenz-Temperatur-Wandler und eine Anordnung zur Erzeugung einer Meßhilfsgröße angeschlossen, der ein Multiplizierer nachgeordnet ist, der auch mit der Auswerteschaltung verbunden ist; dem Frequenz-Temperatur-Wandler und dem Multiplizierer ist eine Rechenschaltung nachgeordnet, deren Ausgangsgröße der mit dem strömenden Medium transportierten Wärmemenge pro Zeiteinheit entspricht.

Die erfindungsgemäße Wärmenmengen-Meßeinrichtung hat den wesentlichen Vorteil, daß sie eines Temperaturfühlers

im zu strömenden Medium nicht bedarf, so daß die üblicherweise vorhandene Ansprechträgheit eines Temperaturfühlers das Meßergebnis der erfindungsgemäßen Meßeinrichtung nicht beeinträchtigt. Die erfindungsgemäße Meßeinrichtung zeichnet sich daher durch eine vergleichsweise hohe Meßgenauigkeit aus.

Es ist zwar bereits aus der DE-OS 25 41 699 ein Vorrichtung zur Messung von Strömungsgeschwindigkeiten bekannt, bei der von einem als Ultraschallsender arbeitenden Ultraschallwandler Schallstrahlen durch ein strömendes Medium zu zwei zur Stömungsrichtung versetzt zum Ultraschallsender liegenden, als Ultraschallempfänger betriebenen Ultraschallwandlern gesendet werden und bei der an die Ultraschallempfänger eine Auswerteschaltung angeschlossen ist, die ein der Phasenverschiebung der empfangenen Schallstrahlen entsprechendes Meßsignal erzeugt, jedoch ist mit dieser bekannten Vorrichtung eine Wärmemengenmessung nicht möglich; sie ist lediglich zur Erfassung der Strömungsgeschwindigkeit eines Mediums geeignet. Wollte man diese bekannte Vorrichtung zur Wärmemengenmessung einsetzen, müßte zusätzlich im strömenden Medium ein Temperaturfühler eingesetzt werden.

Bei dem Ultraschallwandler mit Interdigitalstruktur der Polarisation und/oder der Elektroden, wie er bei der erfindungsgemäßen Meßeinrichtung zumindest als Ultraschallsender eingesetzt wird, handelt es sich um einen Wandler, wie er in der deutschen Patentanmeldung P 30 20 282.5 (VPA 80 P 7084 DE) vorgeschlagen worden ist. Bei diesem Ultraschallwandler ist die Periodizität der Interdigitalstruktur durch die Bedingung (2)

$$d = \lambda /\cos \alpha \qquad (2)$$

gegeben, in der d Periodizität der Interdigitalstruktur der Elektroden und/oder der Polarisation, $\lambda$ die Wellen-

länge des Ultraschalls im strömenden Medium und   den
Winkel bezeichnet, unter dem die Schallstrahlen schräg
das strömende Medium durchsetzen.

Berücksichtigt man, daß die Schallgeschwindigkeit c im
strömenden Medium in bekannter Weise durch die Gleichung
(3) gegeben ist

$$c = \lambda \cdot f \qquad (3)$$

dann ergibt sich aus den Gleichungen (2) und (3) die Beziehung (4)

$$c = f \cdot d \cdot \cos \alpha \qquad (4)$$

Berücksichtigt man darüber hinaus, daß sich bei einer
Vorrichtung zur Messung von Strömungsgeschwindigkeiten
nach der DE-OS 25 41 699 die Strömungsgeschwindigkeit
v durch die Beziehung (5) ausdrücken läßt

$$v = \frac{c^2}{2 \cdot L \cos \alpha} \cdot \frac{\Delta \varphi}{2 \pi \cdot f} \qquad (5)$$

wobei L die Länge der Meßstrecke und $\Delta \varphi$ die Phasendifferenz der empfangenen Ultraschallsignale bedeutet, dann
läßt sich die Strömungsgeschwindigkeit v auch durch die
folgende Gleichung (6) ausdrücken:

$$v = \frac{f \cdot d^2 \cdot \cos \alpha}{4 \pi \cdot L} \cdot \Delta \varphi \qquad (6)$$

Diese Gleichung gilt, solange $\cos \alpha = \dfrac{c}{f \cdot d} = \text{constant}$
$< 1$ erfüllt ist.

Die Strömungsgeschwindigkeit v läßt sich somit durch Messung
der Frequenz f und der Phasendifferenz $\Delta \varphi$ bestimmen.

In der bereits erwähnten älteren Anmeldung P 30 20 282.5
ist bereits darauf hingewiesen worden, daß ein Vorteil
eines Ultraschallwandlers mit Interdigitalstruktur darin
liegt, daß durch bloße Frequenzänderung der Anregungs-

wechselspannung der Abstrahlwinkel $\alpha$ elektrisch nachjustiert bzw. gesteuert werden kann. Dies gilt auch für beispielsweise temperaturbedingte Änderungen des Brechungsindex des strömenden Mediums. Es kann daher durch eine einfache automatische Nachstimmung auf die Optima von Aussenden und Empfangen erreicht werden, daß die oben angegebene Beziehung (4) gilt, so daß der Wert der Schallgeschwindigkeit c proportional f ist.

Die Erfindung baut auf diese Zusammenhänge auf und berücksichtigt, daß es einen gesetzmäßigen Zusammenhang zwischen der Schallgeschwindigkeit c im strömenden Medium und der Temperatur $\vartheta$ gibt, so daß die Frequenz f eine Funktion der Temperatur $\vartheta$ ist. Die Temperatur $\vartheta$ kann also über die Frequenz f gemessen werden, wenn der gesetzmäßige Zusammenhang zwischen der Schallgeschwindigkeit c und der Temperatur $\vartheta$ berücksichtigt wird. Infolgedessen ist bei der erfindungsgemäßen Wärmemenge-Meßeinrichtung durch einen spannungsgesteuerten Oszillator mit vorgeordnetem elektronischem Regler dafür gesorgt, daß der Ultraschallsender jeweils mit einer derartigen Frequenz f beaufschlagt ist, daß die Ultraschallempfänger optimale Empfangsbedingungen haben. Die Ausgangsspannung des Oszillators weist dann eine Frequenz f auf, die auch von der jeweiligen Temperatur $\vartheta$ abhängig ist. In einem nachgeordneten Frequenz-Temperatur-Wandler wird daraus eine Größe gebildet, die der Temperatur entspricht. Diese Größe wird zusammen mit der Ausgangsgröße eines Multiplizierers einer Rechenschaltung zugeführt, deren Ausgangsgröße dann der mit dem strömenden Medium transportierten Wärmemenge pro Zeiteinheit entspricht.

Um den gesetzmäßigen Zusammenhang zwischen der Schallgeschwindigkeit c im strömenden Medium und seiner Temperatur

$\vartheta$ zu berücksichtigen, kann es vorteilhaft sein, wenn der Frequenz-Temperatur-Wandler einen elektronischen Speicher enthält, in dem die Abhängigkeit der Schallgeschwindigkeit im strömenden Medium von der Temperatur gespeichert ist.

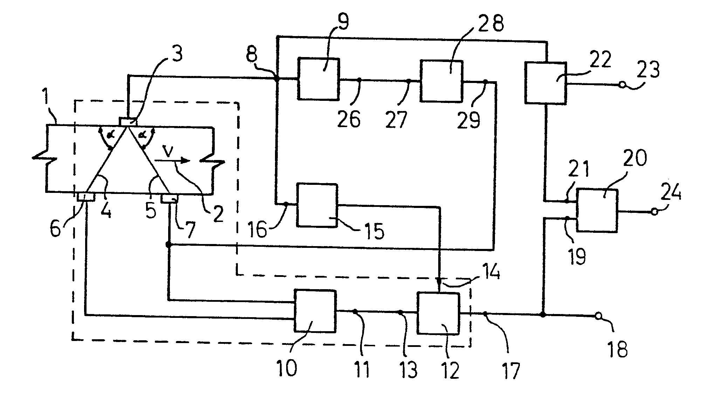

Zur Erläuterung der Erfindung ist in der Figur ein Ausführungsbeispiel der erfindungsgemäßen Wärmenmengen-Meßeinrichtung dargestellt.

Bei dem dargestellten Ausführungsbeispiel durchströmt das zu messende Medium ein Rohr 1 mit einer Geschwindigkeit v in Richtung eines Pfeiles 2. In der Wandung des Rohres 1 befindet sich ein Ultraschallwandler, der als Ultraschallsender 3 betrieben wird. Der Ultraschallsender ist als ein Wandler mit Interdigitalstruktur der Polarisation und/oder der Elektroden ausgebildet. Er sendet Schallstrahlen 4 und 5 jeweils unter einem Abstrahlwinkel $\alpha$ zu zwei weiteren Ultraschallwandlern 6 und 7, die als Ultraschallempfänger arbeiten; die Ultraschallempfänger 6 und 7 sind dem Ultraschallsender 3 gegenüber und versetzt in Bezug auf die Strömungsrichtung angeordnet. Der Ultraschallsender 3 ist an dem Ausgang 8 eines spannungsgesteuerten Oszillators 9 angeschlossen.

Die Ultraschallempfänger 6 und 7 sind mit einer Auswerteschaltung 10 verbunden, die ein der Phasenverschiebung der von den Ultraschallempfängern 6 und 7 empfangenen Ultraschallstrahlen entsprechendes Meßsignal an ihrem Ausgang 11 abgibt. An dem Ausgang 11 der Auswerteschaltung 10 ist ein Multiplizierer 12 mit einem Eingang 13 angeschlossen; ein weiterer Eingang 14 des Multiplizierers 12 ist an eine Anordnung 15 zur Erzeugung einer Meßhilfsgröße angeschlossen. Die Ultraschallwandler 3, 6 und 7, die Auswerteschaltung 10 und der Multiplizierer 12 bilden eine Vorrichtung zur Bestimmung der Strömungsgeschwindigkeit v.

Die Anordnung 15 ist mit ihrem Eingang 16 an den Ausgang 8 des spannungsgesteuerten Oszillators 9 geführt. Die Anordnung 15 gibt eine Meßhilfsgröße ab, die dem von der Frequenz f abhängigen Multiplikator nach Gleichung (6) entspricht. Da ein der Phasendifferenz $\Delta\varphi$ entsprechendes Meßsignal über den Eingang 13 dem Multiplizierer 12 zugeführt wird, entsteht an dessen Ausgang 17 eine Meßgröße, die der Strömungsgeschwindigkeit v entspricht. Diese Meßgröße kann an einem Ausgang 18 für sich abgenommen werden. Sie liegt aber auch an einem Eingang 19 einer elektronischen Rechenschaltung 20.

Diese elektronische Rechenschaltung 20 ist mit einem weiteren Eingang 21 an einen Frequenz-Temperatur-Wandler 22 angeschlossen, an dessen Ausgang 23 eine der Temperatur des strömenden Mediums entsprechenden Größe abnehmbar ist. Eine solche Größe wird auch über den Eingang 21 der elektronischen Rechenschaltung 20 zugeführt, so daß an deren Ausgang 24 eine der mit dem strömenden Medium transportierten Wärmemenge pro Zeiteinheit entsprechende Ausgangsgröße gebildet ist. Um eine von der Temperatur $\vartheta$ abhängige Meßgröße zu erreichen, ist der Eingang des Frequenz-Temperatur-Wandlers 22 mit dem Ausgang 8 des spannungsgesteuerten Oszillators 9 verbunden.

Wie bereits oben ausgeführt worden ist, muß die Meßeinrichtung so gesteuert werden, daß trotz unterschiedlicher Strömungsgeschwindigkeit v und sich ändernder Temperatur des strömenden Mediums die Abstrahlung jeweils unter einem konstanten Winkel $\alpha$ erfolgt. Dies geschieht durch Veränderung der Frequenz f des spannungsgesteuerten Oszillators 9, indem dieser mit seinem Eingang 26 mit dem Ausgang 27 eines elektronischen Reglers 28 verbunden ist, dessen Eingang 29 mit dem Ultraschallempfänger 7 verbunden ist; es kann anstelle dessen auch eine Verbindung zu dem anderen Ultraschallempfänger 6 vorgesehen sein.

Die dargestellte Meßeinrichtung arbeitet in der Weise, daß - gesteuert von dem elektronischen Regler 28 - von dem spannungsgesteuerten Oszillator 9 der Ultraschallsender 3 jeweils mit einer solchen Frequenz f angeregt wird, daß das Optimum seiner Strahlung unter einem konstanten Winkel $\alpha$ zu den Ultraschallempfängern 6 und 7 abgestrahlt wird. In diesem Falle ist das Meßsignal am Eingang 13 des Multilizierers 12 der Phasendifferenz der von den Ultraschallempfängern 6 und 7 empfangenen Signale proportional; das Signal am Eingang 14 des Multiplizierers entspricht dann $f \cdot d^2 \cdot \cos\alpha / 4\pi \cdot L$, so daß am Ausgang 17 des Multplizierers 12 ein Meßsignal ansteht, das der Strömungsgeschwindigkeit v entspricht. Es entspricht dann aber die Frequenz f des spannungsgesteuerten Oszillators 9 auch der jeweiligen Temperatur $\vartheta$ des strömenden Mediums, so daß über den Frequenz-Temperatur-Wandler 22 der elektronischen Rechenschaltung 20 ein weiteres Signal zugeführt wird, das der jeweiligen Temperatur entspricht. In der elektronischen Rechenschaltung 20 kann dann entsprechend der Beziehung (1) eine Ausgangsgröße erzeugt werden, die der transportierten Wärmemenge pro Zeiteinheit entspricht. Diese Größe steht am Ausgang 24 zur Verfügung.

Abschließend ist noch daraufhin zu weisen, daß die Vorrichtung zur Bestimmung der Strömungsgeschwindigkeit auch mit nur einem Ultraschallempfänger auskommt, wenn Ultraschallsender und -empfänger ständig ihre Funktionen vertauschen.

2 Ansprüche
1 Figur

Patentansprüche

1. Wärmemengen-Meßeinrichtung mit einer Vorrichtung zur Bestimmung der Strömungsgeschwindigkeit eines Mediums und einer Einrichtung zur Ermittlung der Temperatur des strömenden Mediums, d a d u r c h   g e k e n n z e i c h - n e t , daß die Vorrichtung zur Bestimmung der Strömungsgeschwindigkeit einen als Ultraschallsender arbeitenden Ultraschallwandler (3) enthält, der Schallstrahlen (4, 5) durch das Medium zu zwei zur Strömungsrichtung versetzt zum Ultraschallsender (3) liegenden, als Ultraschallempfänger betriebenen Ultraschallwandlern (6, 7) sendet, und eine an die Ultraschallempfänger (6, 7) angeschlossene elektronische Auswerteschaltung (10) aufweist, die ein der Phasenverschiebung der empfangenen Schallstrahlen (4, 5) entsprechendes Meßsignal erzeugt, daß zumindest der Ultraschallsender (3) als ein Ultraschallwandler mit Interdigitalstruktur der Polarisation und/oder der Elektroden ausgebildet ist, daß der Ultraschallsender (3) mit einem Ausgang (8) eines spannungsgesteuerten Oszillators (9) verbunden ist, der mit seinem Eingang (26) an dem Ausgang (27) eines einem Ultraschallempfänger (7) nachgeordneten elektronischen Reglers (28) angeschlossen ist, daß an dem Ausgang (8) des Oszillators (9) auch ein die Einrichtung zur Ermittlung der Temperatur bildender Frequenz-Temperatur-Wandler (22) und eine Anordnung (15) zur Erzeugung einer Meßhilfsgröße angeschlossen ist, daß der Anordnung (15) ein Multplizierer (12) nachgeordnet ist, der auch mit der Auswerteschaltung (10) verbunden ist, und daß dem Frequenz-Temperatur-Wandler (22) und dem Multiplizierer (12) eine Rechenschaltung (20) nachgeordnet ist, deren Ausgangsgröße der mit dem strömenden Medium transportierten Wärmemenge pro Zeiteinheit entspricht.

2. Meßeinrichtung nach Anspruch 1, d a d u r c h   g e k e n n -
z e i c h n e t , daß der Frequenz-Temperatur-Wandler (22)
einen elektronischen Speicher enthält, in dem die Abhängigkeit der Schallgeschwindigkeit im strömenden Medium von
der Temperatur gespeichert ist.

Europäisches
Patentamt

EUROPÄISCHER RECHERCHENBERICHT

0063095

Nummer der Anmeldung

EP 82 73 0020

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 954 008 (M. YAMATOTO et al.) * Einführung; Figuren 3,4A,4B,4C; Spalte 3, Zeile 24 - Spalte 6, Zeile 6 * | 1 | G 01 K 17/06 G 01 K 11/24 G 01 F 1/66 |
| | --- | | |
| X,P | DE-A-2 949 346 (E. SICK GmbH) * Einführung; Figuren 1,2; Seiten 7-9 * | 1 | |
| | --- | | |
| A | US-A-3 738 169 (A. COURTY) * Einführung; Figuren 3,4; Spalte 3, Zeile 22 - Spalte 5, Zeile 38 * | 1 | |
| | --- | | |
| A | PROCEEDINGS OF THE IEEE, Band 69, Nr. 1, Januar 1981, Seiten 135-136, New York, USA K. TODA et al.: "Liquid velocity measurement using interdigital transducers" * Seiten 135,136; Figuren 1,2 * | 1 | |
| | --- | | RECHERCHIERTE SACHGEBIETE (Int Cl ³) |
| A | DE-A-2 133 735 (DAIMLER-BENZ AG) * Insgesamt; Figuren 1A,1B,2A,2B * | 1 | G 01 K 17 G 01 K 11 G 01 F 1 |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 03-08-1982 | VISSER F.P.C. |